# EUROPEAN PATENT APPLICATION

(11) **EP 4 641 261 A1**
(43) Date of publication of application: **29.10.2025**
(21) Application number: 23906106.2
(22) Date of filing: 22.12.2023
(51) Int. Cl.: G01V 5/00, G01N 23/00

(54) **VEHICLE-MOUNTED SECURITY CHECK SYSTEM**

(30) Priority: 23.12.2022 CN 202211672066
(71) Applicant: Nuctech Company Limited, TongFang Building, Shuangqinglu, Haidian District Beijing 100084 (CN); Tsinghua University, Haidian District, Beijing 100084 (CN)
(72) Inventor: ZHANG, Li, Beijing 100084 (CN); CHEN, Zhiqiang, Beijing 100084 (CN); CHENG, Yi, Beijing 100084 (CN); HUANG, Qingping, Beijing 100084 (CN); WENG, Majie, Beijing 100084 (CN); MIAO, Qitian, Beijing 100084 (CN); LIANG, Jinning, Beijing 100084 (CN); HONG, Mingzhi, Beijing 100084 (CN); ZHANG, Linlin, Beijing 100084 (CN); YANG, Jianxue, Beijing 100084 (CN)
(74) Representative: Cabinet Beau de Loménie
(86) International application number: PCT/CN2023/141094
(87) International publication number: WO 2024/131951

(57) **Abstract**

A vehicle-mounted security inspection system (100), which is applied to the field of security inspection technology, includes a vehicle body assembly (1) and a CT security inspection device (2). The vehicle body assembly (1) includes a cab (11), a main frame (14), and a subframe (12). The CT security inspection device (2) is used for performing a security inspection on a to-be-inspected item, and arranged at a rear (13) of the vehicle body assembly (1), the rear (13) is located on a side of the vehicle body assembly (1) away from the cab (11). The CT security inspection device (2) is installed on the subframe (12) in a transverse direction of the vehicle body assembly (1), the subframe (12) includes a rear frame (121) at the rear (13), the rear frame (121) includes a first portion (1211), and a height of the first portion (1211) of the rear frame (121) is lower than a height of the main frame (14). The CT security inspection device (2) includes an upright frame (21) and a slip ring (26), the slip ring (26) is rotatably installed on the upright frame (21), and the upright frame (21) is installed on the first portion (1211) such that a height of a portion of the slip ring (26) is lower than the height of the main frame (14).

## Description

This application claims the benefit of priority to Chinese Patent Application No. 202211672066.6, filed on December 23, 2022, the entire contents of this application are hereby incorporated herein by reference.

### TECHNICAL FIELD

The present disclosure relates to the field of security inspection technology, and in particular, to a vehicle-mounted security inspection system.

### BACKGROUND

In a field of security inspection technology, the vehicle-mounted security inspection apparatus in the related art generally adopts a bottom-end product such as an item inspection machine. The maintenance of the bottom-end product such as the item inspection machine is very inconvenient. Some of the existing bottom-end products such as the item inspection machines are arranged vertically inside the vehicle body, and some are arranged horizontally. The belt surface of the bottom-end product such as the item inspection machine is relatively low, thus the frame of the vehicle carrying the item inspection machine has consistent front and rear heights. If a high-end product such as slip ring CT is used, the belt surface of this product is relatively high, and when placed on the frame, it increases the overall height of the vehicle-mounted security inspection apparatus, thereby occupying a large space.

### SUMMARY

Embodiments of the present disclosure provide a vehicle-mounted security inspection system.

An aspect of the present disclosure provides a vehicle-mounted security inspection system, including: a vehicle body assembly, including a cab, a main frame, and a subframe; and a CT security inspection device for performing a security inspection on a to-be-inspected item, wherein the CT security inspection device is arranged at a rear of the vehicle body assembly, and the rear is located on a side of the vehicle body assembly away from the cab, where the CT security inspection device is installed on the subframe in a transverse direction of the vehicle body assembly, the subframe includes a rear frame at the rear, the rear frame includes a first portion, and a height of the first portion of the rear frame is lower than a height of the main frame; and the CT security inspection device includes an upright frame and a slip ring, the slip ring is rotatably installed on the upright frame, and the upright frame is installed on the first portion such that a height of a portion of the slip ring is lower than the height of the main frame.

In some embodiments, the rear frame further includes a second portion and a third portion, the second portion and the third portion are respectively located on both sides of the first portion in the transverse direction of the vehicle body assembly, and the height of the first portion is lower than heights of the second portion and the third portion, such that the subframe has a sunken structure at the rear.

In some embodiments, the CT security inspection device further includes a channel entrance section and a channel exit section, and the channel entrance section and the channel exit section are respectively installed on the second portion and the third portion.

In some embodiments, the subframe further includes a front frame and a middle connecting portion, the front frame, the middle connecting portion, and the rear frame are sequentially arranged in a longitudinal direction of the vehicle body assembly, the front frame, the middle connecting portion, and the rear frame are mechanically connected in sequence or integrally formed, and a height of the rear frame is lower than heights of the front frame and the middle connecting portion.

In some embodiments, the CT security inspection device further includes a first connecting mechanism configured to install the upright frame on the rear frame, at least a portion of the upright frame is lower than an upper surface of the second or third portion of the rear frame, and a height of a connection position between the first connecting mechanism and the upright frame is higher than the height of the portion of the slip ring.

In some embodiments, a distance in a height direction of the vehicle body assembly between the connection position of the first connecting mechanism and the upright frame and a rotation axis of the slip ring is less than a distance in the height direction of the vehicle body assembly between the connection position of the first connecting mechanism and the upright frame and a lowest position of the slip ring.

In some embodiments, the CT security inspection device further includes two sets of first connecting mechanisms provided between an upper end of the upright frame and a lower end of the upright frame and respectively on both sides of the upright frame.

In some embodiments, each set of first connecting mechanisms includes: a first horizontal arm extending outward from an outer side of the upright frame and supported on the rear frame; a first upright arm installed on the outer side of the upright frame, where the first horizontal arm is connected to a lower end of the first upright arm; and a first reinforcing rib connected between the first upright arm and the first horizontal arm.

In some embodiments, the height of the portion of the slip ring is lower than the height of the first horizontal arm.

In some embodiments, the vehicle-mounted security inspection system further includes multiple sets of wheels, the multiple sets of wheels include a first set of wheels and a second set of wheels, the first set of wheels is at least partially located below the cab, the second set of wheels is a wheel set farthest from the cab among the multiple sets of wheels, and in the longitudinal direction of the vehicle body assembly, the CT security inspection device is located on a side of the second set of wheels away from the cab.

In some embodiments, in the longitudinal direction of the vehicle body assembly, a rear end of the main frame is adjacent to the first set of wheels; and the front frame and/or the middle connecting portion are mechanically connected to the main frame, and the rear frame is suspended downward relative to the main frame.

In some embodiments, the CT security inspection device further includes an entrance conveying device and an exit conveying device, the entrance conveying device, the channel entrance section, the upright frame, the channel exit section, and the exit conveying device are sequentially arranged in the transverse direction of the vehicle body, and the transverse direction of the vehicle body is transverse to the longitudinal direction of the vehicle body.

In some embodiments, the vehicle-mounted security inspection system further includes a first hatch door and a second hatch door, the first hatch door and the second hatch door are respectively arranged on both sides of the vehicle body assembly in the transverse direction, the first hatch door is arranged at the entrance conveying device, and the second hatch door is arranged at the exit conveying device.

In some embodiments, the first hatch door is provided with a first operation button for operating the entrance conveying device and/or the CT security inspection device; and/or the second hatch door is provided with a second operation button for operating the exit conveying device and/or the CT security inspection device.

In some embodiments, the vehicle-mounted security inspection system further includes a rear door arranged at the rear of the vehicle body assembly; and the channel entrance section, the upright frame, and the channel exit section are detachably connected, and a width of the rear door is set such that each of the channel entrance section, the upright frame, and the channel exit section is allowed to be hoisted into a cabin of the vehicle body assembly through the rear door.

In some embodiments, the CT security inspection device further includes a second connecting mechanism, and the channel entrance section is installed on the second portion of the rear frame through the second connecting mechanism; and the second connecting mechanism includes: a second upright arm installed on the second portion of the rear frame; a second horizontal arm extending inward from the second upright arm and supporting the channel entrance section; and a second reinforcing rib connected between the second upright arm and the second horizontal arm.

In some embodiments, the CT security inspection device further includes a third connecting mechanism, and the channel exit section is installed on the third portion of the rear frame through the third connecting mechanism; and the third connecting mechanism includes: a third upright arm installed on the third portion of the rear frame; a third horizontal arm extending inward from the third upright arm and supporting the channel exit section; and a third reinforcing rib connected between the third upright arm and the third horizontal arm.

In some embodiments, the CT security inspection device further includes: a machine frame, where an inspection space suitable for the to-be-inspected item is formed in the machine frame, and the inspection space includes a channel entrance communicating with an outside; a first shielding curtain installed at the channel entrance; and a first driving mechanism installed on the machine frame of the CT security inspection device and configured to drive the first shielding curtain to move in the height direction of the vehicle body assembly to open or close the channel entrance.

In some embodiments, the inspection space further includes a channel exit communicating with the outside, and the CT security inspection device further includes: a second shielding curtain installed at the channel exit; and a second driving mechanism installed on the machine frame of the CT security inspection device and configured to drive the second shielding curtain to move in the height direction of the vehicle body assembly to open or close the channel exit.

The additional aspects and advantages of the present disclosure will be set forth in part in the following description, and in part will be apparent from the following description, or may be learned through the practice of the present disclosure.

### BRIEF DESCRIPTION OF THE DRAWINGS

For a more complete understanding of the present disclosure and the advantages thereof, reference is now made to the following description taken in conjunction with the accompanying drawings, and in the drawings:
FIG. 1 shows a schematic structural diagram of a vehicle-mounted security inspection system from one angle according to an embodiment of the present disclosure;
FIG. 2 shows a schematic structural diagram of the vehicle-mounted security inspection system from another angle according to an embodiment of the present disclosure;
FIG. 3 shows a schematic structural diagram of the vehicle-mounted security inspection system from yet another angle according to an embodiment of the present disclosure;
FIG. 4 shows a schematic structural diagram of a CT security inspection device from one angle according to an embodiment of the present disclosure;
FIG. 5 shows a schematic structural diagram of a first connecting mechanism according to an embodiment of the present disclosure;
FIG. 6 shows a schematic structural diagram of the CT security inspection device from another angle according to an embodiment of the present disclosure;
FIG. 7 shows a schematic structural diagram of a second connecting mechanism according to an embodiment of the present disclosure;
FIG. 8 shows a schematic structural diagram of a first driving mechanism according to an embodiment of the present disclosure;
FIG. 9 shows a partial structural schematic diagram of the first driving mechanism according to an embodiment of the present disclosure, in which part of a first shielding curtain is not shown;
FIG. 10 shows an enlarged schematic diagram of part B in FIG. 9;
FIG. 11 shows a partial cross-sectional diagram taken along line A-A in FIG. 8; and
FIG. 12 shows an enlarged schematic diagram of part C in FIG. 11.

Reference Signs:
Vehicle-mounted security inspection system 1000, Vehicle body assembly 1, Cab 11, Subframe 12, Rear frame 121, Front frame 122, Middle connecting portion 123, First portion 1211, Second portion 1212, Third portion 1213, Rear 13, Main frame 14, CT security inspection device 2, Upright frame 21, Channel entrance section 22, Channel exit section 23, Entrance conveying device 24, Exit conveying device 25, Slip ring 26, First connecting mechanism 27, First horizontal arm 271, First upright arm 272, First reinforcing rib 273, Second connecting mechanism 28, Second upright arm 281, Second horizontal arm 282, Second reinforcing rib 283, Third connecting mechanism 29, Machine frame 30, Upright support 31, First shielding curtain 40, First driving mechanism 50, Driver 51, Transmission mechanism 52, First roller 521, Second roller 522, Conveyor belt 523, Bolt mechanism 5231, Coupling portion 524, Body portion 5241, Clamp 5242, Bolt 5243, First guiding mechanism 525, Guide rail 5251, Guide block 5252, Counterweight 526, Second guiding structure 527, Limit device 528, First proximity switch 5281, Mating switch 5282, Second proximity switch 5283, Coupling 529, Second shielding curtain 60, Second driving mechanism 70, First set of wheels 3, Second set of wheels 4, First hatch door 5, Second hatch door 6, Rear door 7, Transverse direction F1, Longitudinal direction F2, Height direction F3.

### DETAILED DESCRIPTION OF EMBODIMENTS

Hereinafter, embodiments of the present disclosure will be described with reference to the accompanying drawings. However, it should be understood that these descriptions are only exemplary and are not intended to limit the scope of the present disclosure. In addition, in the following illustration, descriptions of well-known structures and technologies are omitted to avoid unnecessarily confusing the concepts of the present disclosure. Furthermore, the various embodiments provided below in the present disclosure and the technical features in embodiments may be combined with each other in any manner.

Terms used herein are for the purpose of describing embodiments only and are not intended to limit the present disclosure. In addition, terms "comprising", "including" and the like used herein specify a presence of the feature, step, operation and/or component, but do not preclude a presence or addition of one or more other features, steps, operations or components. All terms (including technical and scientific terms) used herein have the meaning as commonly understood by those skilled in the art, unless otherwise defined. It should be noted that the terms used herein should be construed to have meanings consistent with the context of the present disclosure and should not be construed in an idealized or overly rigid manner.

The vehicle-mounted security inspection apparatus in the related art generally adopts a bottom-end product such as an item inspection machine. The maintenance of the bottom-end product such as the item inspection machine is very inconvenient. Some of the existing bottom-end products such as the item inspection machines are arranged vertically inside the vehicle body, and some are arranged horizontally. The belt surface of the bottom-end product such as the item inspection machine is relatively low, thus the frame of the vehicle carrying the item inspection machine has consistent front and rear heights. If a high-end product such as slip ring CT is used, the belt surface of this product is relatively high, and when placed on the frame of the vehicle, it increases the overall height of the vehicle-mounted security inspection apparatus, thereby occupying a large space.

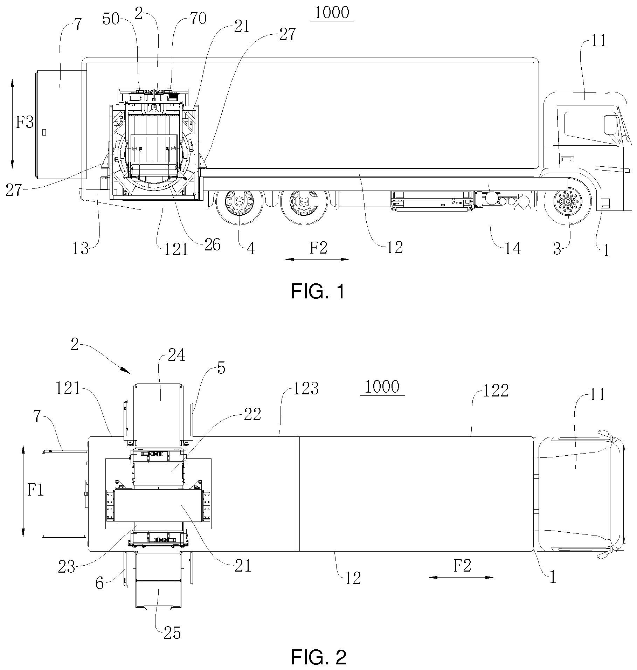

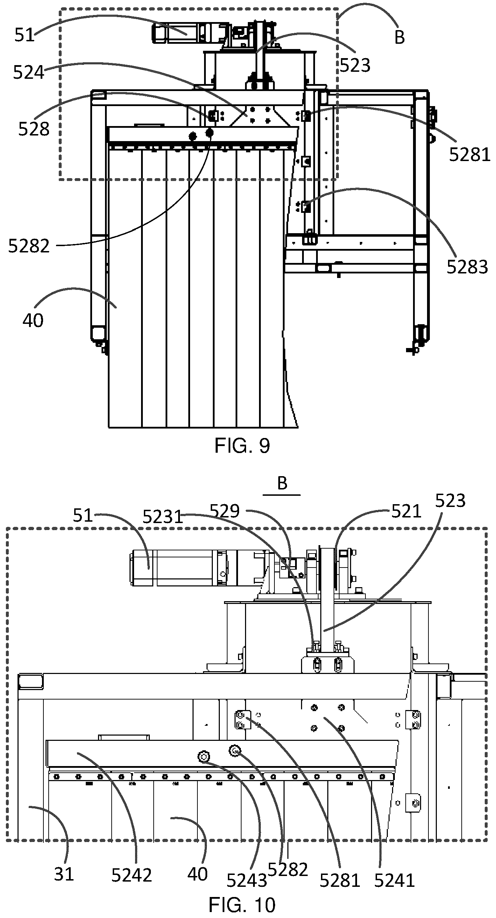

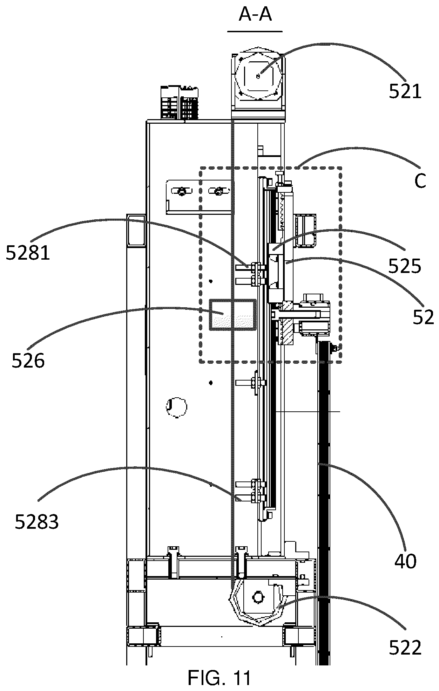

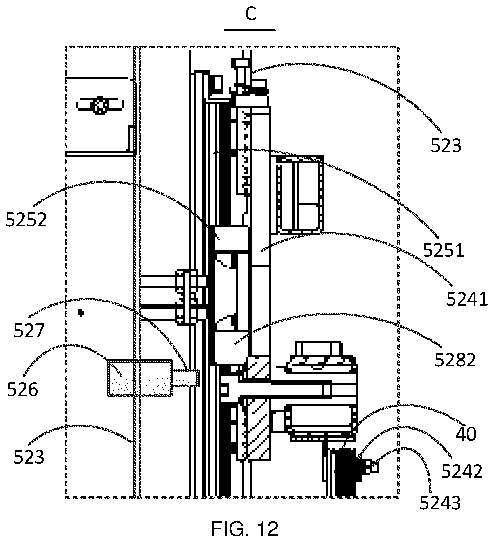

A vehicle-mounted security inspection system 1000 according to embodiments of the present disclosure will be described below with reference to FIG. 1 to FIG. 12.

As shown in FIG. 1 and FIG. 2, the vehicle-mounted security inspection system 1000 according to embodiments of the present disclosure includes a vehicle body assembly 1 and a CT security inspection device 2.

Specifically, with reference to FIG. 1 to FIG.4, the vehicle body assembly 1 includes a cab 11, a main frame 14, and a subframe 12. The CT security inspection device 2 is used for performing a security inspection on a to-be-inspected item, the CT security inspection device 2 is arranged at a rear 13 of the vehicle body assembly 1, and the rear 13 is located on a side of the vehicle body assembly 1 away from the cab 11. The CT security inspection device 2 is installed on the subframe 12 in a transverse direction F1 of the vehicle body assembly 1, the subframe 12 includes a rear frame 121 located at the rear 13, the rear frame 121 includes a first portion 1211, and a height of the first portion 1211 of the rear frame 121 is lower than a height of the main frame 14. The CT security inspection device 2 includes an upright frame 21 and a slip ring 26, the slip ring 26 is rotatably installed on the upright frame 21, and the upright frame 21 is installed on the first portion 1211, such that the height of a portion of the slip ring 26 is lower than the height of the main frame 14.

In the vehicle-mounted security inspection system 1000 according to embodiments of the present disclosure, the cab 11 may be used to drive the main frame 14 and the subframe 12 to move or stop so as to achieve the functions of the vehicle; the subframe 12 may be arranged on the main frame 14, so that the main frame 14 may be used to improve the structural stability of the subframe 12, such that the CT security inspection device 2 installed on the subframe 12 is stable and safe. Specifically, the first portion 1211 of the rear frame 121 may facilitate the installation of the upright frame 21, the upright frame 21 may facilitate the arrangement of the slip ring 26, and the CT security inspection device 2 with the slip ring 26 is easy to maintain. Since the height of the first portion 1211 of the rear frame 121 is lower than the height of the main frame 14, and the upright frame 21 is installed on the first portion 1211, the height of the portion of the slip ring 26 is lower than the height of the main frame 14, whereby the slip ring 26 and the upright frame 21 are integrally sunk to the main frame 14, so that the overall structure of the vehicle-mounted security inspection system 1000 is compact. In addition, since the installation space at the rear 13 is large, the rear frame 121 being located at the rear 13 does not interfere with other components on the vehicle body assembly 1, further making the overall structure of the vehicle-mounted security inspection system 1000 compact. The CT security inspection device 2 is installed on the subframe 12 in the transverse direction F1 of the vehicle body assembly 1, which may facilitate the arrangement of the CT security inspection device 2.

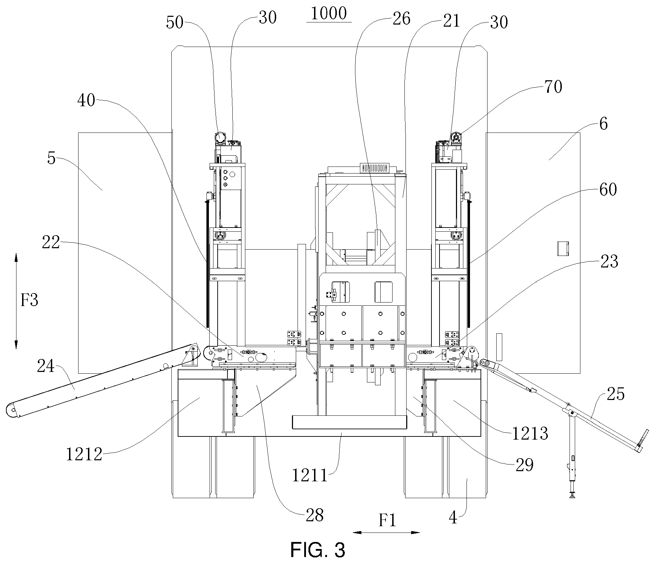

In some embodiments of the present disclosure, as shown in FIG. 3, the rear frame 121 may further include a second portion 1212 and a third portion 1213. The second portion 1212 and the third portion 1213 are respectively located on both sides of the first portion 1211 in the transverse direction F1 of the vehicle body assembly 1. The height of the first portion 1211 is lower than the heights of the second portion 1212 and the third portion 1213, such that the sub-frame 12 has a sunken structure at the rear 13. Thus, by setting the rear frame 121 as the first portion 1211, the second portion 1212 and the third portion 1213, it is convenient to form the sunken structure. The sunken structure is convenient for installing the upright frame 21. Installing the upright frame 21 on the sunken first portion 1211 prevents the CT security inspection device 2 from interfering with other components of the vehicle body assembly 1, such that the overall structure of the vehicle-mounted security inspection system 1000 is compact.

In some examples, the bottom of the upright frame 21 protrudes to make room for the circumferential space of the slip ring 26, and the sunken structure may accommodate the protruding portion of the installed upright frame 21. Compared with the related art, the supports at the bottoms of both sides of the channel may be eliminated. Therefore, the sunken structure of the present disclosure for installing the CT security inspection device 2 reduces the weight of the CT security inspection device 2.

According to some embodiments of the present disclosure, as shown in FIG. 2 and FIG. 3, the CT security inspection device 2 may further include a channel entrance section 22 and a channel exit section 23. The channel entrance section 22 and the channel exit section 23 are respectively installed on the second portion 1212 and the third portion 1213. It can be understood that the to-be-inspected item may enter the slip ring 26 through the channel entrance section 22 and leave the slip ring 26 through the channel exit section 23 after the inspection is completed. The second portion 1212 may facilitate the arrangement of the channel entrance section 22, and the third portion 1213 may facilitate the arrangement of the channel exit section 23.

In some embodiments of the present disclosure, as shown in FIG. 1 and FIG. 2, the subframe 12 may further include a front frame 122 and a middle connecting portion 123. The front frame 122, the middle connecting portion 123, and the rear frame 121 are sequentially arranged in the longitudinal direction F2 of the vehicle body assembly 1. The front frame 122, the middle connecting portion 123, and the rear frame 121 are mechanically connected in sequence or integrally formed, and the height of the rear frame 121 is lower than heights of the front frame 122 and the middle connecting portion 123.

The front frame 122, the middle connecting portion 123, and the rear frame 121 being mechanically connected in sequence may facilitate disassembly and installation of the front frame 122, the middle connecting portion 123, and the rear frame 121, thereby facilitating maintenance and replacement of any component of the front frame 122, the middle connecting portion 123, and the rear frame 121. The front frame 122, the middle connecting portion 123, and the rear frame 121 being integrally formed enhances the overall structural strength of the front frame 122, the middle connecting portion 123, and the rear frame 121, which may be formed in one step during processing, simplifying manufacturing. The height of the rear frame 121 being lower than heights of the front frame 122 and the middle connecting portion 123 may facilitate the arrangement of the sunken structure, thereby facilitating the arrangement of the CT security inspection device 2.

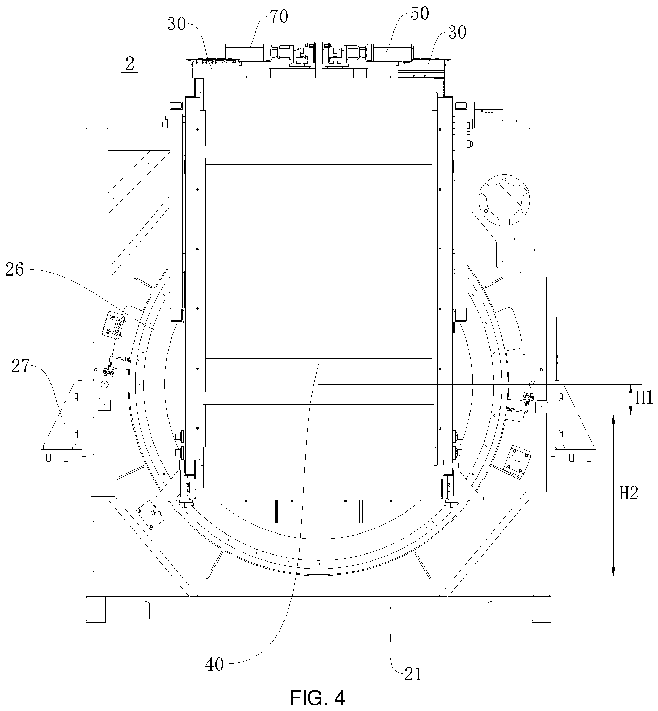

According to some embodiments of the present disclosure, as shown in FIG. 1 and FIG. 4, the CT security inspection device 2 may further include a first connecting mechanism 27 configured to install the upright frame 21 on the rear frame 121. At least a portion of the upright frame 21 is lower than the upper surface of the second portion 1212 or the third portion 1213 of the rear frame 121, and the height of the connection position between the first connecting mechanism 27 and the upright frame 21 is higher than the height of the portion of the slip ring 26. Thus, the mounting of the upright frame 21 on the rear frame 121 may be facilitated by the first connecting mechanism 27. In addition, the height of the connection position between the first connecting mechanism 27 and the upright frame 21 being higher than the height of the portion of the slip ring 26 ensures stable fixing of the upright frame 21 at the middle position of the slip ring 26, providing a stable installation and operating environment for the slip ring 26. The middle position of the slip ring 26 may refer to the position between the upper and lower ends of the slip ring 26.

In some embodiments of the present disclosure, as shown in FIG. 4, a distance H1 in a height direction F3 of the vehicle body assembly 1 between the connection position of the first connecting mechanism 27 and the upright frame 21 and the rotation axis of the slip ring 26 is less than a distance H2 in the height direction F3 of the vehicle body assembly 1 between the connection position of the first connecting mechanism 27 and the upright frame 21 and a lowest position of the slip ring 26. Thus, this ensures stable fixing of the upright frame 21 at the middle position of the slip ring 26, thereby providing a stable installation and operating environment for the slip ring 26. The middle position of the slip ring 26 may refer to the position between the upper and lower ends of the slip ring 26.

According to some embodiments of the present disclosure, as shown in FIG. 1 and FIG. 4, the CT security inspection device 2 may include two sets of first connecting mechanisms 27, which are between an upper end of the upright frame 21 and a lower end of the upright frame 21 and respectively on both sides of the upright frame 21. Thus, the two sets of first connecting mechanisms 27 make the fixing of the upright frame 21 more stable.

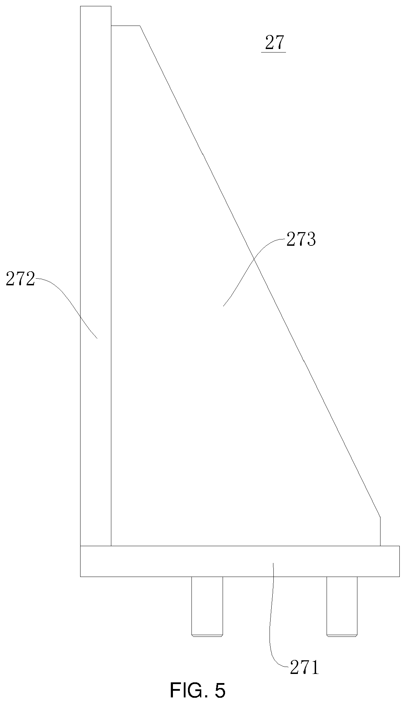

In some embodiments of the present disclosure, as shown in FIG. 5, each set of first connecting mechanisms 27 includes: a first horizontal arm 271 extending outward from an outer side of the upright frame 21 and supported on the rear frame 121; a first upright arm 272 installed on the outer side of the upright frame 21, where the first horizontal arm 271 is connected to a lower end of the first upright arm 272; and a first reinforcing rib 273 connected between the first upright arm 272 and the first horizontal arm 271. Thus, this facilitates connecting the upright frame 21 to the rear frame 121, and the first reinforcing rib 273 may facilitate the strengthening of the structural strength of the first connecting mechanism 27.

According to some embodiments of the present disclosure, as shown in FIG. 4, the height of the portion of the slip ring 26 is lower than the height of the first horizontal arm. Thus, this enables the distance H1 in the height direction F3 of the vehicle body assembly 1 between the connection position of the first connecting mechanism 27 and the upright frame 21 and the rotation axis of the slip ring 26 to be less than the distance H2 in the height direction F3 of the vehicle body assembly 1 between the connection position of the first connecting mechanism 27 and the upright frame 21 and the lowest position of the slip ring 26.

According to some embodiments of the present disclosure, as shown in FIG. 1 and FIG. 2, the vehicle-mounted security inspection system 1000 may further include multiple sets of wheels, and the multiple sets of wheels include a first set of wheels 3 and a second set of wheels 4. The first set of wheels 3 is at least partially located below the cab 11, and the second set of wheels 4 is a set of wheels farthest from the cab 11 among the multiple sets of wheels. In the longitudinal direction F2 of the vehicle body assembly 1, the CT security inspection device 2 is located on a side of the second set of wheels 4 away from the cab 11.

It can be understood that, the first set of wheels 3 may include a driving wheel. The first set of wheels 3 being at least partially located below the cab 11 may facilitate the cab 11 controlling the rotation of the first set of wheels 3 to drive the travel of the vehicle body assembly 1. Additionally, the first set of wheels 3 being at least partially located below the cab 11 may reduce the occupation of the space of the vehicle body carrying a front cabin by the first set of wheels 3, facilitate the arrangement of the front cabin, and increase the space of the vehicle body for arranging the front cabin. The CT security inspection device 2 being located on the side of the second set of wheels 4 away from the cab 11 ensures that the lowest installation position of the CT security inspection device 2 arranged on the vehicle body assembly 1 is not interfered with by the second set of wheels 4, which facilitates the installation and arrangement of the CT security inspection device 2, and makes the overall structure of the vehicle-mounted security inspection system 1000 compact.

In some embodiments of the present disclosure, as shown in FIG. 1, in the longitudinal direction F2 of the vehicle body assembly 1, the rear end of the main frame 14 is adjacent to the first set of wheels 3; the front frame 122 and/or the middle connecting portion 123 are mechanically connected to the main frame 14, and the rear frame 121 is suspended downward relative to the main frame 14. Thus, the main frame 14 may facilitate the arrangement of the front frame 122 and/or the middle connecting portion 123, and the connecting structure is stable and has good strength. The rear frame 121 being suspended downward relative to the main frame 14 may facilitate forming a sunken structure.

According to some embodiments of the present disclosure, as shown in FIG. 2, FIG. 3, and FIG. 6, the CT security inspection device 2 may further include an entrance conveying device 24 and an exit conveying device 25. The entrance conveying device 24, the channel entrance section 22, the upright frame 21, the channel exit section 23, and the exit conveying device 25 are sequentially arranged in the transverse direction F1 of the vehicle body, and the transverse direction F1 of the vehicle body is transverse to the longitudinal direction F2 of the vehicle body. Thus, this may facilitate the arrangement of the CT security inspection device 2, enabling the CT security inspection device 2 to be compactly installed at the rear 13 of the vehicle body assembly 1.

In some embodiments of the present disclosure, as shown in FIG. 2, the vehicle-mounted security inspection system 1000 may further include a first hatch door 5 and a second hatch door 6, and the first hatch door 5 and the second hatch door 6 are respectively arranged on both sides of the vehicle body assembly 1 in the transverse direction F1. The first hatch door 5 is arranged at the entrance conveying device 24, and the second hatch door 6 is arranged at the exit conveying device 25. It can be understood that when the vehicle-mounted security inspection system 1000 is in an operating state, the first hatch door 5 and the second hatch door 6 may be opened to facilitate security inspection; when the vehicle-mounted security inspection system 1000 is in a non-operating state, the first hatch door 5 and the second hatch door 6 may be closed to ensure the safety of the components in the vehicle-mounted security inspection system 1000.

According to some embodiments of the present disclosure, the first hatch door 5 is provided with a first operation button for operating the entrance conveying device 24 and/or the CT security inspection device 2; and/or the second hatch door 6 is provided with a second operation button for operating the exit conveying device 25 and/or the CT security inspection device 2. Thus, the first operation button may facilitate the operation of the entrance conveying device 24 and/or the CT security inspection device 2, and the second operation button may facilitate the operation of the exit conveying device 25 and/or the CT security inspection device 2.

In some embodiments of the present disclosure, as shown in FIG. 1 and FIG. 2, the vehicle-mounted security inspection system 1000 further includes a rear door 7 arranged at the rear 13 of the vehicle body assembly 1. The channel entrance section 22, the upright frame 21, and the channel exit section 23 are detachably connected, and the width of the rear door 7 is set such that each of the channel entrance section 22, the upright frame 21, and the channel exit section 23 is allowed to be hoisted into the cabin of the vehicle body assembly 1 through the rear door 7. Thus, it is convenient to hoist the channel entrance section 22, the upright frame 21, and the channel exit section 23 into the cabin, thus facilitating the installation and disassembly of the channel entrance section 22, the upright frame 21, and the channel exit section 23.

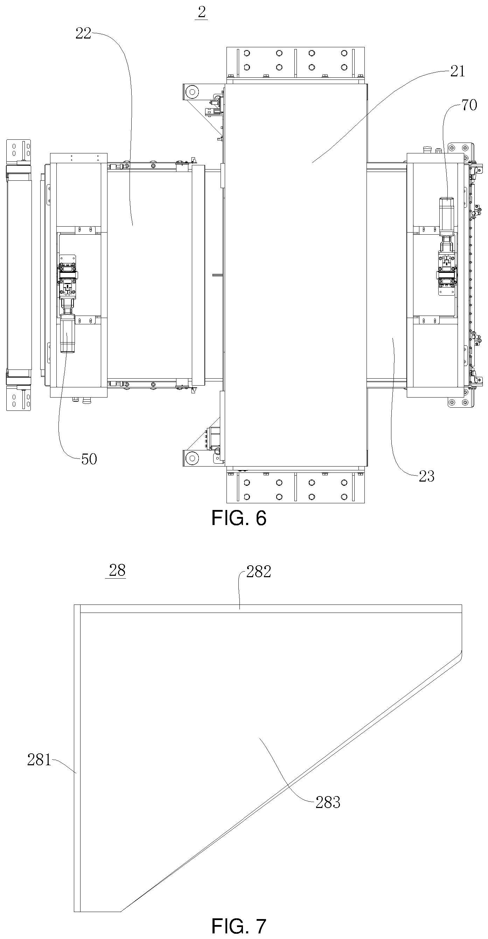

According to some embodiments of the present disclosure, as shown in FIG. 3 and FIG. 7, the CT security inspection device 2 may further include a second connecting mechanism 28, and the channel entrance section 22 is installed on the second portion 1212 of the rear frame 121 through the second connecting mechanism 28. The second connecting mechanism 28 includes: a second upright arm 281 installed on the second portion 1212 of the rear frame 121; a second horizontal arm 282 extending inward from the second upright arm 281 and supporting the channel entrance section 22; and a second reinforcing rib 283 connected between the second upright arm 281 and the second horizontal arm 282. Thus, it is convenient to connect the channel entrance section 22 to the second portion 1212 of the rear frame 121, and the second reinforcing rib 283 may facilitate the strengthening of the structural strength of the second connecting mechanism 28.

In some embodiments of the present disclosure, as shown in FIG. 3, the CT security inspection device 2 may further include a third connecting mechanism 29, and the channel exit section 23 is installed on the third portion 1213 of the rear frame 121 through the third connecting mechanism 29. The third connecting mechanism 29 includes: a third upright arm installed on the third portion 1213 of the rear frame 121; a third horizontal arm extending inward from the third upright arm and supporting the channel exit section 23; and a third reinforcing rib connected between the third upright arm and the third horizontal arm. Thus, it is convenient to connect the channel exit section 23 to the third portion 1213 of the rear frame 121, and the third reinforcing rib may facilitate the strengthening of the structural strength of the third connecting mechanism 29.

According to some embodiments of the present disclosure, as shown in FIG. 3 and FIG. 4, the CT security inspection device 2 may further include a machine frame 30, a first shielding curtain 40, and a first driving mechanism 50. An inspection space suitable for the to-be-inspected item is formed in the machine frame 30, and the inspection space has a channel entrance communicating with an outside. The first shielding curtain 40 is installed at the channel entrance, and the first driving mechanism 50 is installed on the machine frame 30 of the CT security inspection device 2 and configured to drive the first shielding curtain 40 to move in the height direction F3 of the vehicle body assembly 1 to open or close the channel entrance. Thus, the first shielding curtain 40 may open or close the channel entrance under the driving of the first driving mechanism 50. When the first shielding curtain 40 opens the channel entrance, the to-be-inspected item may enter the inspection space for inspection through the channel entrance; when the first shielding curtain 40 closes the channel entrance, the first shielding curtain 40 may shield the influence of radiation during inspection on places other than the CT security inspection device 2. The machine frame 30 may facilitate the arrangement of the first driving mechanism 50.

In some embodiments of the present disclosure, as shown in FIG. 3 and FIG. 4, the inspection space further includes a channel exit communicating with the outside. The CT security inspection device 2 further includes: a second shielding curtain 60 installed at the channel exit; and a second driving mechanism 70 installed on the machine frame 30 of the CT security inspection device 2 and configured to drive the second shielding curtain 60 to move in the height direction F3 of the vehicle body assembly 1 to open or close the channel exit. Thus, the second shielding curtain 60 may open or close the channel exit under the driving of the second driving mechanism 70. When the second shielding curtain 60 opens the channel exit, the to-be-inspected item may leave the inspection space through the channel exit; when the second shielding curtain 60 closes the channel exit, the second shielding curtain 60 may shield the influence of radiation during inspection on places other than the CT security inspection device 2. The machine frame 30 may facilitate the arrangement of the second driving mechanism 70.

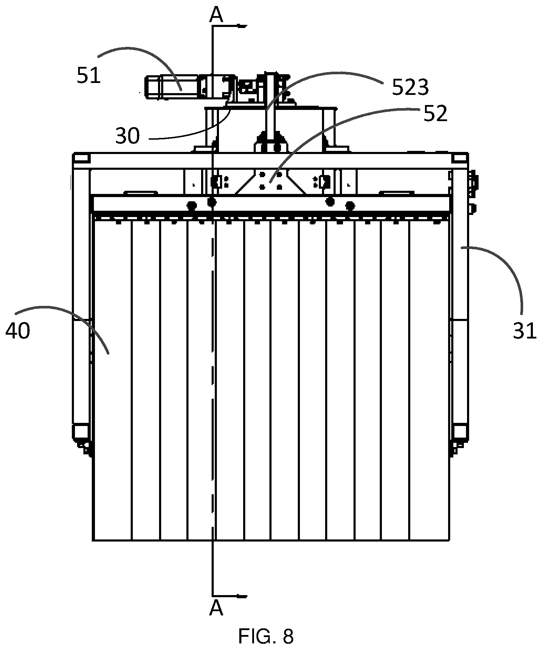

According to some embodiments of the present disclosure, referring to FIG. 8 to FIG. 12, the first driving mechanism 50 includes: a driver 51 installed on the machine frame 30; and a transmission mechanism 52, and the driver 51 drives the first shielding curtain 40 to rise or fall through the transmission mechanism 52 to open or close the channel entrance.

According to some embodiments of the present disclosure, referring to FIG. 8 to FIG. 12, the driver 51 includes a motor suitable for driving the transmission mechanism 52. The transmission mechanism 52 includes: a first roller 521 installed on the upper portion of the machine frame 30 and rotates under the driving of the motor through a coupling 529; a second roller 522 installed on the machine frame 30 and located at the lower portion of the first roller 521; a conveyor belt 523 surrounding the first roller 521 and the second roller 522; and a coupling portion 524, where the first shielding curtain 40 is connected to the conveyor belt 523 through the coupling portion 524, such that the first shielding curtain 40 moves up and down integrally with the conveyor belt 523.

According to some embodiments of the present disclosure, referring to FIG. 8 to FIG. 12, the coupling portion 524 includes: a body portion 5241 connected to the conveyor belt 523; and a pair of clamps 5242 that clamp the upper end of the shielding curtain using bolts 5243 and are connected to the body portion 5241. In this way, the driver 51 drives the first roller 521 to rotate, thereby further driving the conveyor belt 523 to move up and down, and further moving up and down as a whole.

Although embodiments in which the transmission mechanism includes the first roller, the second roller, and the conveyor belt are described above, the present disclosure is not limited to this. In an alternative embodiment, the transmission mechanism may include a worm wheel driven by a motor and a worm screw engaged with the worm wheel, with the coupling portion installed on the worm screw. In this way, the motor drives the worm wheel to rotate, and the rotation of the motor is converted into linear motion of the worm screw through the engagement of the worm wheel and the worm screw, so that the worm screw drives the first shielding curtain to rise and fall. In another alternative embodiment, a piston rod of a pneumatic cylinder or a hydraulic cylinder may be used to drive the coupling portion to move up and down in a reciprocating linear mode, thereby driving the first shielding curtain to rise and fall.

According to some embodiments of the present disclosure, referring to FIG. 8 to FIG. 12, the body portion 5241 has a substantially isosceles triangle or isosceles trapezoid shape. The narrower upper portion of the body portion 5241 is connected to the conveyor belt 523 via a releasable bolt mechanism 5231, and the wider lower portion of the body portion 5241 is connected to a substantially middle portion of the pair of clamps 5242. In this way, the first shielding curtain 40 may be driven to move by one conveyor belt 523, and the first shielding curtain 40 may be maintained in a stable posture during up-and-down movement.

According to some embodiments of the present disclosure, referring to FIG. 8 to FIG. 12, the transmission mechanism 52 further includes a first guiding structure 525, and the first guiding structure is adapted to guide the up-and-down movement of the coupling portion 524. In an exemplary embodiment, the first guiding mechanism 525 includes: a guide rail 5251 installed on the machine frame 30; and a guide block 5252 installed on the coupling portion 524. For example, a guide groove extending in the up-down direction may be formed on the guide rail 5251, with a portion of the guide block 5252 inserted into the guide groove. In this way, the coupling portion 524 and the first shielding curtain 40 may move linearly in the up-down direction, and the first shielding curtain 40 may be prevented from being twisted. In an alternative embodiment, the first guiding mechanism 525 includes guide grooves formed on the inner sides of a pair of upright supports 31 of the machine frame 30 and extending up and down, with both ends of the clamp 5242 respectively inserted into the guide grooves to guide the lifting and the falling of the first shielding curtain 40.

According to some embodiments of the present disclosure, referring to FIG. 8 to FIG. 12, the transmission mechanism 52 further includes a counterweight 526. The weight of the counterweight 526 depends on the total weight of the coupling portion 524 and the first shielding curtain 40, and is connected to the side of the conveyor belt 523 opposite to the side of the conveyor belt 523 where the coupling portion 524 is connected to the conveyor belt 523 so as to balance the weight of the coupling portion 524 and the first shielding curtain 40. By providing the counterweight 526, the force required to drive the first shielding curtain 40 to move is reduced, thereby reducing the power of the driver 51.

According to some embodiments of the present disclosure, referring to FIG. 8 to FIG. 12, the transmission mechanism 52 further includes a second guiding structure 527, and the second guiding structure 527 is adapted to guide the up-and-down movement of the counterweight 526. In an exemplary embodiment, the second guiding mechanism 527 includes: a guide rail installed on the machine frame 30; and a guide block installed on the counterweight. In this way, the counterweight may move linearly in the up-down direction.

According to some embodiments of the present disclosure, referring to FIG. 8 to FIG. 12, the transmission mechanism 52 further includes a limit device 528, and the limit device 528 is adapted to limit the movement range of the coupling portion 524 in the up-down direction, thereby limiting the lifting and falling range of the first shielding curtain 40. Specifically, the limit device 528 includes: a first proximity switch 5281 installed on the machine frame 30; and a mating switch 5282 installed on the coupling portion 524. The first driving mechanism 50 stops driving the first shielding curtain 40 from rising in response to the mating switch 5282 approaching the first proximity switch 5281.

Further, referring to FIG. 8 to FIG. 12, the limit device 528 further includes a second proximity switch 5283 installed on the machine frame 30. The first driving mechanism 50 stops driving the first shielding curtain 40 from falling in response to the mating switch 5282 approaching the second proximity switch 5283.

That is, when the mating switch 5282 approaches the first proximity switch 5281, the first shielding curtain 40 stops rising; when the mating switch 5282 approaches the second proximity switch 5283, the first shielding curtain 40 stops falling. Thus, the movement range of the upper end of the first shielding curtain 40 is limited within the distance between the first proximity switch 5281 and the second proximity switch 5283.

That is, the maximum lifting and falling range of the first shielding curtain 40 as a whole is the distance between the first proximity switch 5281 and the second proximity switch 5283. In an exemplary embodiment, the first proximity switch 5281 and the second proximity switch 5283 are electromagnetically coupled with the mating switch 5282 by means of inductive sensing. For example, each of the first proximity switch 5281 and the second proximity switch 5283 includes a transmitting coil, and the mating switch 5282 includes a receiving coil electromagnetically coupled with the transmitting coil. In an alternative embodiment, the first proximity switch 5281 and the second proximity switch 5283 are electrically connected to the mating switch 5282 by means of electrical contact.

The connection mode and driving mode between the second driving mechanism and the second shielding curtain are the same as those between the first driving mechanism and the first shielding curtain, and will not be described in detail here.

In the description of the present disclosure, it should be understood that the directions or positional relationships indicated by the terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are based on the directions or positional relationships shown in the accompanying drawings, are merely for the convenience of describing the present disclosure and simplifying the description, and do not indicate and imply that the apparatus or element referred to must have a particular orientation or be constructed and operated in a particular orientation, and therefore, should not be construed as limiting the present disclosure. In addition, a feature defined with "first" or "second" may, explicitly or implicitly, include one or more of the features. In the description of the present disclosure, unless otherwise stated, "a plurality of" means two or more.

In the description of the present disclosure, it should be noted that, unless otherwise explicitly stated or limited, the terms "installed", "connected", and "coupled" should be interpreted broadly, and for example, they may refer to fixed connections, detachable connections, or integral connections; mechanical connections or electrical connections; direct connections, or indirect connections via intermediate media, or internal communications between two elements. Those of ordinary skill in the art may understand the specific meanings of the above terms in the present disclosure according to specific situations.

In the description of the specification, a description with reference to the terms "one embodiment", "some embodiments", "illustrative embodiments" "examples", "specific examples", or "some examples" or the like means that the specific features, structures, materials, or characteristics described in conjunction with the embodiment or example are included in at least one embodiment or example of the present invention. In the specification, schematic expressions of the above-described terms are not necessarily directed to the same embodiments or examples. Moreover, the specific features, structures, materials, or characteristics described may be combined in any one or more embodiments or examples in an appropriate manner.

Embodiments of the present disclosure have been shown and described. However, those of ordinary skill in the art may understand that various changes, modifications, substitutions, and variations may be made to these embodiments without departing from the principle and spirit of the present disclosure, and the scope of the present disclosure is defined by the claims and their equivalents.

Those skilled in the art will appreciate that features recited in the various embodiments of the present disclosure and/or the claims may be combined and/or incorporated in a variety of ways, even if such combinations or incorporations are not clearly recited in the present disclosure. In particular, the features recited in the various embodiments of the present disclosure and/or the claims may be combined and/or incorporated in a variety of ways without departing from the spirit and teachings of the present disclosure, and all such combinations and/or incorporations fall within the scope of the present disclosure.

Those skilled in the art will appreciate that although the present disclosure has been illustrated and described with reference to specific exemplary embodiments of the present disclosure, without departing from the spirit and scope of the present disclosure defined by the appended claims and their equivalents, various changes in forms and details may be made to the present disclosure. Therefore, the scope of the present disclosure should not be limited to the aforementioned embodiments, but should be determined not only by the appended claims, but also by the equivalents of the appended claims.

## Claims

1. A vehicle-mounted security inspection system, comprising:
a vehicle body assembly comprising a cab, a main frame, and a subframe; and
a CT security inspection device configured to perform a security inspection on a to-be-inspected item, wherein the CT security inspection device is arranged at a rear of the vehicle body assembly, and the rear is located on a side of the vehicle body assembly away from the cab,
wherein the CT security inspection device is installed on the subframe in a transverse direction of the vehicle body assembly, the subframe comprises a rear frame at the rear, the rear frame comprises a first portion, and a height of the first portion of the rear frame is lower than a height of the main frame; and
the CT security inspection device comprises an upright frame and a slip ring, the slip ring is rotatably installed on the upright frame, and the upright frame is installed on the first portion such that a height of a portion of the slip ring is lower than the height of the main frame.

2. The vehicle-mounted security inspection system according to claim 1, wherein the rear frame further comprises a second portion and a third portion, the second portion and the third portion are respectively located on both sides of the first portion in the transverse direction of the vehicle body assembly, and the height of the first portion is lower than heights of the second portion and the third portion, such that the subframe has a sunken structure at the rear.

3. The vehicle-mounted security inspection system according to claim 2, wherein the CT security inspection device further comprises a channel entrance section and a channel exit section, and the channel entrance section and the channel exit section are respectively installed on the second portion and the third portion.

4. The vehicle-mounted security inspection system according to claim 3, wherein the subframe further comprises a front frame and a middle connecting portion; the front frame, the middle connecting portion, and the rear frame are sequentially arranged in a longitudinal direction of the vehicle body assembly; and the front frame, the middle connecting portion, and the rear frame are mechanically connected in sequence or integrally formed, and a height of the rear frame is lower than heights of the front frame and the middle connecting portion.

5. The vehicle-mounted security inspection system according to claim 3, wherein the CT security inspection device further comprises a first connecting mechanism configured to install the upright frame on the rear frame, at least a portion of the upright frame is lower than an upper surface of the second portion or the third portion of the rear frame, and a height of a connection position between the first connecting mechanism and the upright frame is higher than a height of a portion of the slip ring.

6. The vehicle-mounted security inspection system according to claim 5, wherein a distance in a height direction of the vehicle body assembly between the connection position of the first connecting mechanism and the upright frame and a rotation axis of the slip ring is less than a distance in the height direction of the vehicle body assembly between the connection position of the first connecting mechanism and the upright frame and a lowest position of the slip ring.

7. The vehicle-mounted security inspection system according to claim 3, wherein the CT security inspection device further comprises two sets of first connecting mechanisms provided between an upper end of the upright frame and a lower end of the upright frame and respectively on both sides of the upright frame.

8. The vehicle-mounted security inspection system according to claim 7, wherein each of the two sets of first connecting mechanisms comprises:
a first horizontal arm extending outward from an outer side of the upright frame and supported on the rear frame;
a first upright arm installed on the outer side of the upright frame, wherein the first horizontal arm is connected to a lower end of the first upright arm; and
a first reinforcing rib connected between the first upright arm and the first horizontal arm.

9. The vehicle-mounted security inspection system according to claim 8, wherein a height of a portion of the slip ring is lower than a height of the first horizontal arm.

10. The vehicle-mounted security inspection system according to claim 4, further comprising multiple sets of wheels,
wherein the multiple sets of wheels comprise a first set of wheels and a second set of wheels, the first set of wheels is at least partially located below the cab, the second set of wheels is a set of wheels farthest from the cab among the multiple sets of wheels, and in the longitudinal direction of the vehicle body assembly, the CT security inspection device is located on a side of the second set of wheels away from the cab.

11. The vehicle-mounted security inspection system according to claim 10, wherein in the longitudinal direction of the vehicle body assembly, a rear end of the main frame is adjacent to the first set of wheels; and
the front frame and/or the middle connecting portion are mechanically connected to the main frame, and the rear frame is suspended downward relative to the main frame.

12. The vehicle-mounted security inspection system according to claim 3, wherein the CT security inspection device further comprises an entrance conveying device and an exit conveying device, and
wherein the entrance conveying device, the channel entrance section, the upright frame, the channel exit section, and the exit conveying device are sequentially arranged in the transverse direction of the vehicle body assembly, and the transverse direction of the vehicle body assembly is transverse to a longitudinal direction of the vehicle body assembly.

13. The vehicle-mounted security inspection system according to claim 12, further comprising a first hatch door and a second hatch door,
wherein the first hatch door and the second hatch door are respectively arranged on both sides of the vehicle body assembly in the transverse direction of the vehicle body assembly, the first hatch door is arranged at the entrance conveying device, and the second hatch door is arranged at the exit conveying device.

14. The vehicle-mounted security inspection system according to claim 13, wherein the first hatch door is provided with a first operation button for operating the entrance conveying device and/or the CT security inspection device; and/or
the second hatch door is provided with a second operation button for operating the exit conveying device and/or the CT security inspection device.

15. The vehicle-mounted security inspection system according to claim 14, further comprising a rear door arranged at the rear of the vehicle body assembly; and
the channel entrance section, the upright frame, and the channel exit section are detachably connected, and a width of the rear door is set such that each of the channel entrance section, the upright frame, and the channel exit section is allowed to be hoisted into a cabin of the vehicle body assembly through the rear door.

16. The vehicle-mounted security inspection system according to claim 15, wherein the CT security inspection device further comprises a second connecting mechanism, and the channel entrance section is installed on the second portion of the rear frame through the second connecting mechanism; and
the second connecting mechanism comprises a second upright arm installed on the second portion of the rear frame; a second horizontal arm extending inward from the second upright arm and supporting the channel entrance section; and a second reinforcing rib connected between the second upright arm and the second horizontal arm.

17. The vehicle-mounted security inspection system according to claim 16, wherein the CT security inspection device further comprises a third connecting mechanism, and the channel exit section is installed on the third portion of the rear frame through the third connecting mechanism; and
the third connecting mechanism comprises: a third upright arm installed on the third portion of the rear frame; a third horizontal arm extending inward from the third upright arm and supporting the channel exit section; and a third reinforcing rib connected between the third upright arm and the third horizontal arm.

18. The vehicle-mounted security inspection system according to claim 17, wherein the CT security inspection device further comprises:
a machine frame, wherein an inspection space for the to-be-inspected item is formed in the machine frame, and the inspection space comprises a channel entrance communicating with an outside;
a first shielding curtain installed at the channel entrance; and
a first driving mechanism installed on the machine frame of the CT security inspection device and configured to drive the first shielding curtain to move in a height direction of the vehicle body assembly to open or close the channel entrance.

19. The vehicle-mounted security inspection system according to claim 18, wherein the inspection space further comprises a channel exit communicating with the outside, and the CT security inspection device further comprises:
a second shielding curtain installed at the channel exit; and
a second driving mechanism installed on the machine frame of the CT security inspection device and configured to drive the second shielding curtain to move in the height direction of the vehicle body assembly to open or close the channel exit.
